# EUROPEAN PATENT APPLICATION

(11) **EP 1 489 497 A2**
(43) Date of publication of application: **22.12.2004**
(21) Application number: 04253622.7
(22) Date of filing: 17.06.2004
(51) Int. Cl.: G06F 9/44

(54) **Method and system for downloading configurable user interface elements over a data network**

(30) Priority: 18.06.2003 US 479727 P; 16.06.2004 US 869187
(71) Applicant: Openwave Systems Inc., Redwood City, CA 94063 (US)
(72) Inventor: Schillings, Benoit, Palo Alto, CA 94303 (US); Minsk, Alan D., Woodinville, WA 98077 (US); Hyland, Timothy W., San Francisco, CA 94117 (US); Ying, Charles H., Piedmont, CA 94610 (US); Huehn, Robert G., Foster City, CA 94404 (US); Reed, Michael R., Chapel Hill, North Carolina 27516 (US)
(74) Representative: Potter, Julian Mark

(57) **Abstract**

A method and system for retrieving and installing for output display one or more configurable elements over a data network including the steps of receiving a list of configurable elements, selecting one or more of the configurable elements from the list of configurable elements, the each one or more of the configurable elements having associated therewith an attribute, the attribute including one or more properties associated with a user interface element of a mobile device, verifying the selected one or more configurable elements, and storing the verified one or more configurable elements is disclosed.

## Description

### RELATED APPLICATION

This application claims priority under 35 USC §119 to Provisional Patent Application No 60/479,727 filed on June 18, 2003, entitled "Method and System for Downloading Configurable User Interface Elements Over a Data Network", the disclosure of which is incorporated herein by reference for all purposes.

### BACKGROUND OF THE INVENTION

### 1. Field of the Invention

The present invention relates to method and apparatus for downloading configurable user interface elements over a data network. More specifically, the present invention relates to the manipulation and configuration of files (hereinafter referred to as "skins" or "configurable elements") which may be associated with one or more functions or applications for the data processing device such as a mobile telephone.

### 2. Description of the Related Art

The usage of mobile electronic devices has become ubiquitous. In particular, the usage of mobile telephones has experienced an explosive growth worldwide, as more and more users turn to mobile telephones not just as a means to communicate and stay in contact, but to take advantage of the additional functionality offered by the mobile telephones. Some of such functionalities include information distribution (e.g., searching for a particular restaurant in a specific area based on, for example, type of cuisine and hours of operation, making online purchases of merchandises over the mobile telephone network, and so on).

With the increase in added functionality of the mobile devices, and with the improvement of the wireless networks, more users of such devices integrate the usage of their mobile devices with their lives. For example, teenagers may use their mobile devices not only to talk, but also to transmit and receive graphic images, video images, perform text messaging, and otherwise share files. Professionals may find particular use in their mobile devices with integrated personal digital assistant (PDA) functions to maintain their schedules.

Whatever the usage and whoever the users, the number of mobile devices introduced into the market place and activated over the various wireless networks around the worlds continues to grow. With such growth, it is particularly important to maximize the utility of the compact display screen on such mobile devices. In other words, by inherent definition, the typical desire for mobile devices is a compact design. However, with the complex functionality added and incorporated into each generation of mobile devices, the display screen of such mobile devices may become too crowded, not easy to navigate, and simply become less user friendly. This is particularly, important when the graphic representation on the display screen of the mobile device is associated with a commercial transaction such as the purchase of a service or a product.

### SUMMARY OF THE INVENTION

In view of the foregoing, there is provided a method of retrieving a configurable element over a data network, comprising the steps of receiving a list of configurable elements, selecting one or more of the configurable elements from the list of configurable elements, the each one or more of the configurable elements having associated therewith an attribute, verifying the selected one or more configurable elements, and storing the verified one or more configurable elements.

The attribute may include one or more properties associated with a user interface element of a mobile device.

Additionally, the method may further include the step of transmitting a request for the list of configurable elements, where the step of receiving the list of configurable elements may be in response to the transmitting step.

In one aspect, the step of receiving the list of configurable elements may include receiving the list over a wireless data network.

Further, the step of receiving a list of configurable elements may be automatically performed in response to a predetermined event, where the predetermined event may include the step of powering on a mobile device for receiving the list of configurable elements.

In a further embodiment, the one or more configurable elements may be an extensible markup language (XML) file.

Moreover, in yet a further embodiment, the verifying step may include the steps of determining the validity of the selected one or more configurable elements, and determining an access attribute associated with each of the selected one or more configurable elements. The step of determining the validity of the selected one or more configurable elements may include retrieving an attribute associated with each of the selected one or more configurable elements, and comparing the retrieved attribute with a predetermined attribute associated with the respective each of the selected one or more configurable elements.

Additionally, the predetermined attribute may include a configurable element validity information.

Also, the access attribute associated with each of the selected one or more configurable elements may include a digital rights management (DRM) information associated with the respective one or more configurable elements.

The method in yet still a further embodiment may include the step of updating a user interface associated with the selected one or more configurable elements.

The step of updating may additionally include the steps of generating one or more output signals corresponding to the selected one or more configurable elements, and output displaying the generated one or more output signals on a display screen of a mobile device.

The updating may include the steps of retrieving a definition associated with the user interface, determining a refresh attribute of the retrieved definition, and updating the user interface based on the refresh attribute, where the refresh attribute may include one of a scalable vector graphics (SVG), a bitmap, a set of name-value pairs, and a set of name-value pairs associated with a respective set of bitmaps.

Additionally, each of the selected one or more configurable elements may be respectively associated with a third party product or service, where the third party product or service associated with each of the one or more configurable elements may include one or more of a music download, a video clip download, a merchandise purchase, a set of preconfigured softkeys, and a fee-based subscription information.

A system for providing a configurable element over a data network in accordance with another embodiment of the present invention includes a data network, a vendor terminal (or a "server") operatively coupled to the data network, the vendor terminal configured to transmit one or more configurable elements, a user device operatively coupled to the data network, the user device configured to receive the one or more configurable elements from the vendor terminal for display on the user device.

The user device may in one embodiment include one of a mobile telephone, a personal digital assistant, a handheld computer, a laptop computer, and a pager.

Furthermore, the data network may include a wireless data network.

The user device may be configured to transmit a user device identification code to the vendor terminal, and further, wherein the vendor terminal is configured to transmit a list of eligible configurable elements based on the user device identification code received from the user device.

Additionally, the user device may include a display screen configured to output display the received one or more configurable elements.

A program storage device readable by a machine, tangibly embodying a program of instructions executable by the machine to perform a method of retrieving a configurable element over a data network in accordance with still another embodiment of the present invention includes the steps of receiving a list of configurable elements, selecting one or more of the configurable elements from the list of configurable elements, the each one or more of the configurable elements having associated therewith an attribute, verifying the selected one or more configurable elements, and storing the verified one or more configurable elements.

A method of providing content access over a data network in accordance with still another embodiment includes identifying a one or more attributes of a content over a data network, associating a configurable element with one or more attributes of the data content, and transmitting the configurable element, where the configurable element may include a user interface element.

In one aspect, the user interface element may include one or more of a background information, a softkey information, a layout information of one or more applications, an audio information, a video information, and a data network information.

Further, the step of transmitting may include the step of receiving a request associated with the one or more attributes of the content over the data network.

Alternatively, the step of transmitting may include the step of identifying a predetermined configuration of a mobile device, and in response thereto, transmitting the configurable element to the mobile device.

In still a further embodiment, the method may further include the step of receiving a purchase request for purchasing one or more of a product and a service associated with the one or more attributes of the content, where the one or more of a product and a service may include a music download, video download, a merchandise, a video game, and a use license of an application.

Also, the method may also include the step of transmitting a purchase transaction information in response to the purchase request, where the purchase transaction information may include a price information associated with the one or more of the product and the service.

Additionally, the step of receiving the purchase request may include receiving a financial account information, and a personal information associated with the financial account information, where the financial account information may include one of a credit card information, a debit card information, a cash card information, and a bank account information.

Indeed, a skin or a configurable element may be viewed as a set of files that specify a mobile device's look and feel. For example, in one embodiment, a skin may have an associated ring tone or a color configuration. In addition, a skin may also be associated with one or more functions or applications of the operating device such as the mobile device such that when downloaded and configured, the skin may modify the existing functions and/or applications pre-configured in the mobile device. In one embodiment, skins may include documents which define the visual and behavioral aspects of the mobile device browser components, where the components may include a user interface (UI) widget (or sometimes referred to as "element"), a screen composition, an application and the entire system.

A skin may also be configured to define a graphical user interface (GUI) that is linked to other content, or to drive increased data network usage based on the association with the particular content. In addition, the skin may re-configure the operation (in addition to the look and feel) of a mobile device so that the mobile device may interact with other applications, and networks, as well as functions pre-loaded in the mobile device but not enabled, in addition to the functions downloaded to the mobile device. This may include softkeys, buttons, menu items, and the like. Also, a skin may be downloadable, installed in the mobile device, and serve to re-configure either (or both) a look and feel and some operational elements.

In addition, within the scope of the present invention, the skin may be made available in conjunction with other content or applications (to enable a better user experience with that content or application), as a result of the mobile device user accessing related content (for example, as a prize, as an approach to introduce the user to related content, a way to encourage exposure to other content or functions), or as a form of incentive to utilize a network function, device function, or web service, among other possibilities.

The main skin file in one embodiment is an XML (extensible markup language) file, and is configured to refer to the image and sound files that define the rest of the skin. In one aspect of the present invention, the skin specifies the background images, for example, of the mobile device user interface. Moreover, the skin may specify the sounds for various common user actions. Additionally, the skin is configured to specify the coordinates of the user interface components or can be used to state the relative constraints of the layout of the different user interface elements, as well as the shape and styles of the components and the background colors.

In one aspect, the skins may be implemented using a combination of XML documents and bitmap images. Moreover, other hierarchical representation of name/value pairs may be used. Moreover, a skin file (XML) may be compiled to an efficient binary representation when loaded. With space constraints, the binary version may be stored rather than downloading and storing the XML version. The XML to binary compilation process may be performed either on demand or at startup or any combination of both. Additionally, as mentioned above, the XML files may be composed of XML fragments which are identified by a name and contains a set of name-value pairs. In one embodiment, the name-value pairs may be textual or numerical. Also, the name-value pairs may also reference sub-frames into the skin picture files as discussed in further detail below.

Moreover, the XML information may be linked to different levels within the mobile device browser such as the widget class, the application, and at a global level. Additionally, since skinning properties may be configured to target a given level within the mobile device browser, a skin item at the application level, for example, may be configured to override a global skin setting.

In a similar manner, the skinning parameters used by a sub class (in the object oriented sense) of a widget which would have some default skinning parameters may be extended or overridden by a set of skinning properties specific to this sub class. Also, a sub class may also just add some skinning properties to the default skin parameters which would be specific to this subclass.

These and other features and advantages of the present invention will be understood upon consideration of the following detailed description of the invention and the accompanying drawings.

### BRIEF DESCRIPTION OF THE DRAWING

FIG.1 illustrates a block diagram of the overall data network in accordance with one embodiment of the present invention;
FIG. 2 is a flowchart illustrating the initial skin selection and downloading operation performed with a mobile device in accordance with one embodiment of the present invention;
FIG. 3 is a flowchart illustrating the skin selection and user interface updating process in accordance with one embodiment of the present invention;
FIG. 4 is a flowchart illustrating the user interface update routine in accordance with one embodiment of the present invention; and
FIG. 5 is a flowchart illustration the user interface element drawing in accordance with one embodiment of the present invention.

### DETAILED DESCRIPTION OF THE INVENTION

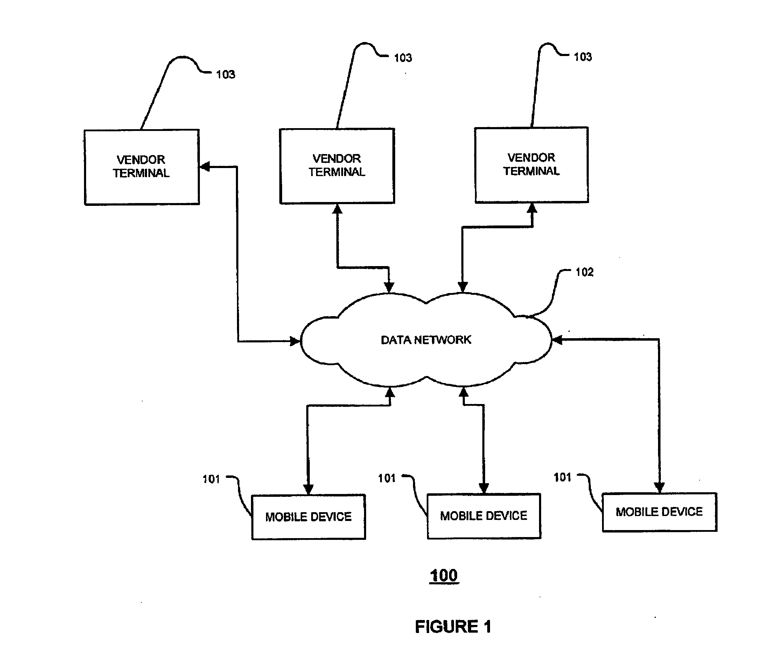

FIG. 1 illustrates a block diagram of the overall data network in accordance with one embodiment of the present invention. Referring to the Figure, there is provided a communication network 100 including a plurality of mobile devices 101, each operatively coupled to a data network 102, and further, a plurality of vendor terminals 103, each also operatively coupled to the data network 102. In one embodiment, the mobile device 101 may include a mobile telephone, a communication enabled personal digital assistant, a laptop or handheld computer (including electronic mail enabled devices), each configured for wireless communication over the data network 102 for transmitting and/or receiving data from one or more of the vendor terminals 103, as well as other devices (including other mobile devices 101) connected to the data network 102.

Indeed, in one embodiment, each mobile device 101 includes a display screen for displaying the user interface of the mobile device 101, an input terminal, and an output terminal typical of those found in the mobile telephones commercially available. Indeed, the input terminals may include the on/off button, the scroll buttons to navigate the display menu shown on the display screen, and alphanumeric buttons which allow the user to input numbers as well as text. The output terminal may include sound speakers for outputting audio data (for example, during a telephone conversation, or in response to a predetermined function of the mobile device 101 such as, an alarm or an audio notification).

In one embodiment, one or more of the vendor terminals 103 may be associated with a commercial vendor which, among others, offers for sale or otherwise provides products and/or services for use with the mobile device 101. For example, the vendor terminal 103 may be an internet portal for an online game vendor that offers games (on free trial basis for a given period of time, or for a fee) for download and play by the mobile devices 101 over the data network 102. In this case, the data network 102 may include the internet enabled for wireless communication. Alternatively, the vendor terminals 103 may be configured to provide online download of music clips and associated merchandise for purchase by users of the mobile devices 101, where the download and purchase transactions may be performed securely over the data network 102.

In one embodiment, the vendor terminal 103 may be configured to transmit configurable user interface elements which may be selected by the mobile device 101 and downloaded into mobile device 101 over the data network 102. Such configurable user interface elements may include skins as discussed above, which may be associated with one or more of a product and a service offered by the vendor terminal 103. Once downloaded, the visual representation of the skin may be manipulated such that the mobile device 101 is configured to display the downloaded skin (or a portion of the associated files thereof) on the display portion of the mobile device 101. Moreover, with in the scope of the present invention, the skin may be associated with other information such as downloading instructions, skin identification information, usage rights information associated with the skin, and validity information of the skin, for use by the mobile device 101.

Additionally, within the scope of the present invention, the data network 102 may be configured such that the data transmission over the data network 102 is secure by, for example, encryption, password protection, or any other approaches to ensure that the information transmitted over the data network 102 reaches the intended recipient of that information. Moreover, sensitive data such as personal information related to the mobile device 101 users including birth date information, social security information, credit card information and any other unique identity information may be transmitted securely over the data network 102.

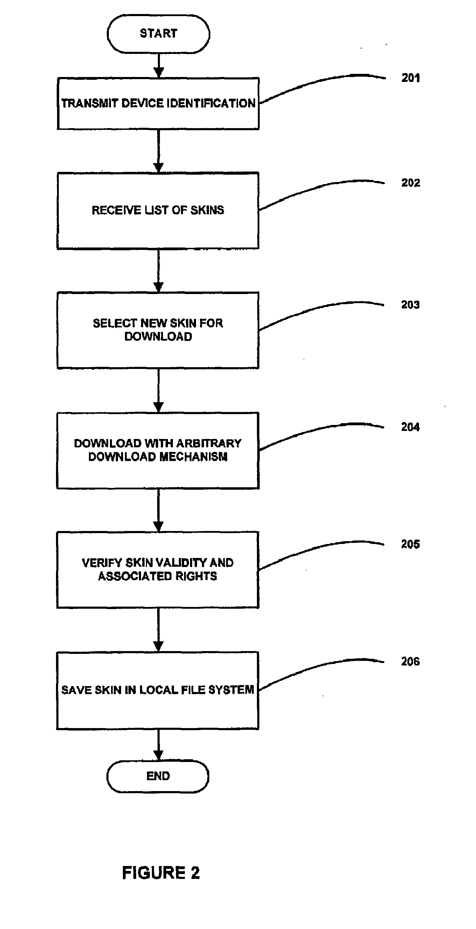

FIG. 2 is a flowchart illustrating the initial skin selection and downloading operation performed with a mobile device in accordance with one embodiment of the present invention. Referring to FIGS 1 and 2, at step 201, a mobile device 101 (FIG. 1) is configured to transmit the mobile device identification information over the data network 102 (FIG. 1) to a preconfigured download manager which may be in the data network 102, including in one or more of the vendor terminals 103. The download manager in one embodiment is configured to identify the mobile device identification information transmitted from the mobile device 101, and is configured to recognize the mobile device 101 (based on the device model, and manufacturer, for example), and to identify the eligible skins for the mobile device 101.

In an alternate embodiment, the download manager may be configured to recognize the mobile device 101 identification information which has requested a skin based on the transmission received from the mobile device 101 which may include, for example, a unique identification code. In this approach, based on the skin request information transmission received from the mobile device 101, the download manager may be configured to recognize the mobile device 101 and the corresponding eligible skins, and transmit the same to the requesting mobile device 101.

In one embodiment, the list of eligible skins offered to the mobile device user may be based on other parameters such as a mobile device user profile, device user download history (e.g., usage patterns), and mobile device initial user registration process identified by the download manager.

Referring back to FIG. 2, having determined the eligible skins associated with the mobile device 101 requesting the skin at step 201, at step 202, the mobile device 101 is configured to receive a list of eligible skins for download from the corresponding vendor terminal 103 which is configured to provide the eligible skins corresponding to the skin request from the mobile device 101. In one embodiment, the list of skins received by the mobile device 101 over the data network 102 may include a list file including an identification information for each skin included therein, and the necessary information for providing downloading instructions from the vendor terminal 103 providing the requested skins.

In one embodiment, the skins and the associated downloading instructions from the vendor terminal 103 may include a free trial period information transmitted to the mobile device 101, and during which, the mobile device 101 may download and use the associated skin free of charge. Moreover, upon expiration of the trial period, the vendor terminal 103 may be configured to automatically generate and transmit a skin usage renewal information to the mobile device 101 with pricing information for such renewal.

Referring back to FIG. 2, after receiving a list of skins at step 202, the mobile device 101 is configured to select (for example, by user selection operation using one or more of the input commands on the mobile device 101) a desired skin from the list of skins received for download by the user at the mobile device 101. Thereafter at step 204, the selected skin is configured to be downloaded onto the mobile device 101 with arbitrary download mechanism such as, for example, using file transfer protocol (FTP) or any other downloading processes which would allow secure and uncompromised download of files onto the mobile device 101.

After downloading the selected skin at step 204, the downloaded skin is verified for validity and/or associated rights. In other words, the mobile device 101 is configured to determine that the downloaded skin is valid - that is, the skin file itself has not been compromised or corrupt. Also, the mobile device 101 may also be configured to determine the digital rights associated with the downloaded skin and to confirm the compatibility of the downloaded skin with the mobile device 101 which downloaded the selected skin.

In one embodiment, the associated rights information may include Digital Rights Management (DRM) information along with an identification information for identifying the type of mobile devices that can support the downloaded skin. In this manner, as shown in the Figure, in accordance with one embodiment of the present invention, the downloaded skin file is verified to ensure file integrity, and also confirmed for compatibility with the mobile device 101.

Referring back to FIG. 2, at step 206, the downloaded skin file whose validity and associated rights have been verified are saved in the local file systems of the mobile device 101. In other words, in one embodiment of the present invention, once the skin is downloaded, the skin is available for use by the mobile device 101, and thus, a separate execution step with an executable program file is not necessary.

In the manner described above, the mobile device 101 may be configured to transmit a skin request over the data network 102, and to receive a list of eligible skins for download, and after selecting a desired skin, to verify the skin validity and associated rights prior to locally storing the skin files in the storage unit (not shown) of the mobile device 101.

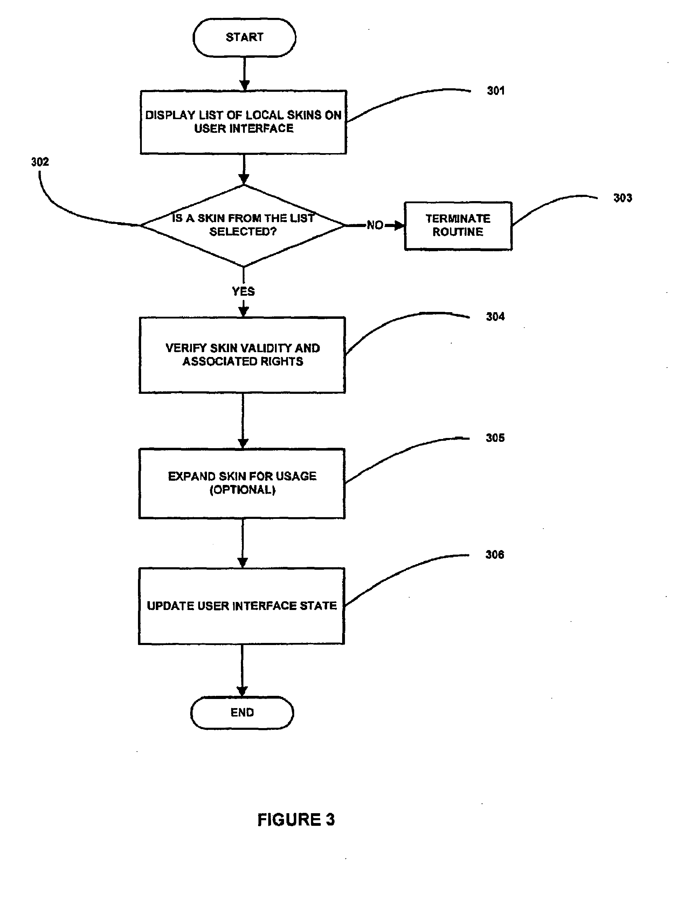

FIG. 3 is a flowchart illustrating the skin selection and user interface updating process in accordance with one embodiment of the present invention. Referring to the Figure, at step 301, the user interface displayed on the mobile device 101 display screen displays a list of local skins (for example, a graphical representation of each skin locally resident in the mobile device 101). In one embodiment, each skin displayed on the user interface may be optionally selected by manipulation of the input buttons on the mobile device 101 so as to easily and readily navigate the user interface. Also, each skin displayed may be clickable (i.e., selected by a simple select operation by way of clicking one of the input buttons on the mobile device 101).

Indeed, referring to FIG. 3, at step 302, the mobile device 101 determines whether the user has selected one of the skins displayed at step 301. If it is determined at step 302 that the user has not selected any of the skins from the displayed list, then the routine terminates at step 303, and the user interface returns to the previous menu displayed on the display screen of the mobile device 101. On the other hand, if it is determined at step 302 that the user has selected one of the skins from the displayed list, then at step 304, the skin is verified for validity and its associated rights.

More specifically, the mobile device 101 in one embodiment may be configured with a function which confirms the digital rights associated with the file, and execute appropriate actions if it is determined that the associated rights have expired or are otherwise invalid (e.g., incompatible with the mobile device 101 and so on). For example, one example of such appropriate action in the case it is determined that the associated rights have expired is to offer the user the ability to renew the rights based on a predetermined set of conditions and limitations of the corresponding vendor of the associated skin. Indeed, in one embodiment, if it is determined that the rights associated with a selected skin have expired, the user of the mobile device 101 may be provided with a prompt to renew the rights to use the associated skin for a predetermined fee, and/or for a predetermined renewal period. Furthermore, as discussed above, the mobile device 101 may be configured to verify the validity of the skin to ensure that the skin file has not been corrupted.

Referring back to FIG. 3, at the optional step 305, the downloaded skin file may optionally be expanded, converted, and otherwise manipulated so as to be compatible with the mobile device 101. For example, in the case where the downloaded skin file may be in compressed format, the mobile device 101 may be configured to decompress the file so as to be usable in the mobile device 101. As discussed, step 305 may be skipped in the routine shown in FIG. 3 in the case where the downloaded skin file format is compatible with the mobile device 101 downloading the file, and further, no additional file conversion or manipulation is necessary to use the skin file in the mobile device 101.

In an alternative embodiment, the downloaded skin file may be preconfigured with a self-installation routine such that, upon the completion of the download process by the mobile device 101, the skin file automatically initiates the installation process in the mobile device 101.

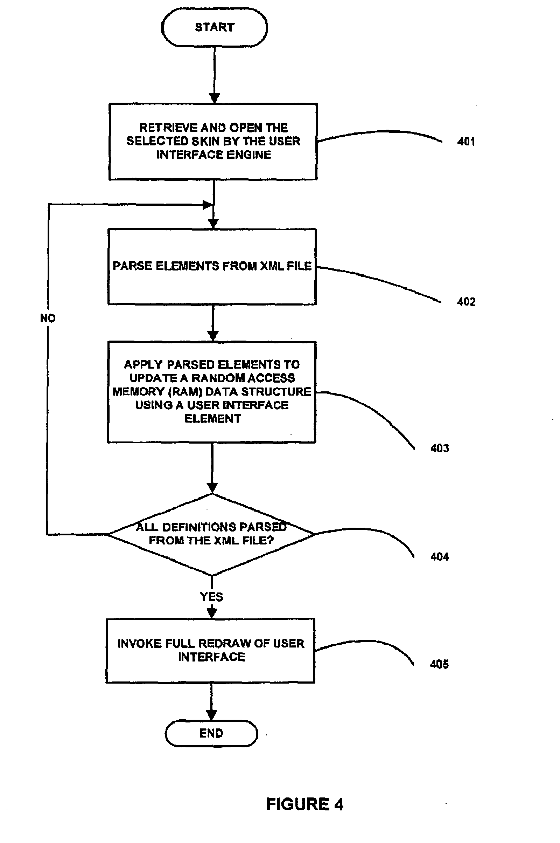

After verifying the skin validity and associated rights at step 304, and optionally expanding the skin file for compatibility at step 305, the user interface state of the mobile device 101 is updated at step 306 as discussed in further detail in conjunction with FIG. 4 below. Indeed, all dependent processes in the mobile device 101 associated with the downloaded skin are updated at this step. Thus, the selected skin has been downloaded, verified for validity and associated rights, and the data structure associated with the downloaded skin file is ready to be used by the user interface engine of the skin in the mobile device 101.

FIG. 4 is a flowchart illustrating the user interface update routine of step 306 shown in FIG. 3 in accordance with one embodiment of the present invention. Referring to FIG. 4, at step 401, the user interface engine of the mobile device 101 is configured to retrieve and open the selected skin in the mobile device 101. For example, in one embodiment, for each skin, there may be a main file which has an XML (extensible markup language) definition, which may, in turn, refer to other related files pertaining to the selected skin. As such, the user interface engine is configured to retrieve the XML definition associated with the selected skin in the mobile device 101.

Thereafter, at step 402, the configuration of the user interface elements (or "widgets") are parsed from the XML file. In other words, within the skin file may include a list of definitions, and as such, the user interface engine may take each definition and parse it out one at a time. In one embodiment, this may include the user interface engine reading the text XML, providing it to the XML parser, and outputting a collection of memory data structures (i.e., a compact representation of skin parameters). The resulting output may include a set of data structures such as a set of value parameters for use by the user interface engine.

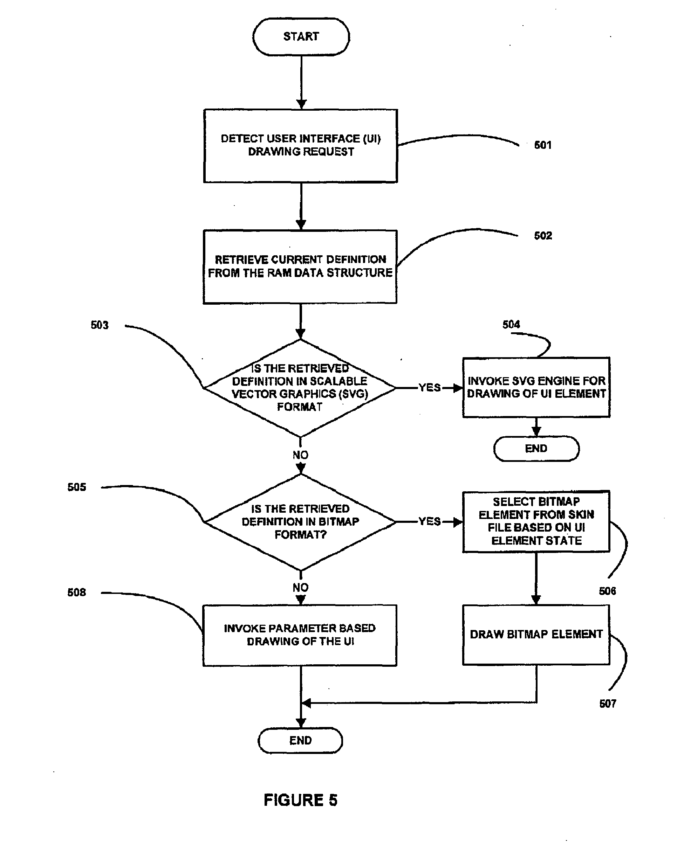

Referring back to FIG. 4, having parsed the user interface elements from the XML file associated with the selected skin, at step 403, the parsed elements may be used to update a RAM data structure using a user interface element (or any other type of refreshable memory unit in the mobile device 101), and to output the RAM data structure to be used by the user interface associated with the selected skin. Thereafter at step 404, it is determined whether all of the relevant (or necessary) definitions of the skin file have been parsed. If it is determined at step 404 that not all of the relevant definitions of the skin file have been parsed, the routine repeats steps 402 through 404 until it is determined that all relevant definitions have been parsed. As such, when it is determined at step 404 that all relevant definitions of the skin file have been parsed, at step 405, the redraw function of the user interface of the mobile device 101 is invoked. In one embodiment, this step performs the function of refreshing the affected portions of the user interface of the display screen in the mobile device 101 based on the parsed and updated definitions as discussed in further detail below in conjunction with FIG. 5. In one aspect of the present invention, the redraw of the user interface function may be automatically invoked and implemented upon detecting that all relevant definitions have been parsed from the XML file (step 404).

FIG. 5 is a flowchart illustration the user interface element drawing of step 405 of FIG. 4 in accordance with one embodiment of the present invention. Referring to FIG. 5, at step 501 a user interface (UI) drawing request is detected. In one embodiment, the drawing request may include the detection of completion of parsing all definitions from the XML file associated with the downloaded skin as discussed above in conjunction with FIG. 4. In an alternate embodiment, the user interface drawing request may include, for example, the detection (for example, by the processor of the mobile device 101) of one or more of display screen scroll movements and the active application switching, or whenever it is determined that the display screen of the mobile device 101 is modified.

Thereafter at step 502, the user interface element is configured to retrieve the current definition from the RAM data structure as discussed above in step 403 of FIG. 4. After retrieving the current definition from the RAM data structure at step 502, it is first determined at step 503 whether the retrieved definition is in a scalable vector graphics (SVG) format. The SVG (Scalable Vector Graphics) is an XML file format which defines graphics, animation, and interaction with procedural code. Any static image may be replaced by an SVG image or a set of images to implement animation or any other animation source. The animation can be displayed automatically either in static or in idle state, or displayed as a response to an outside event, such as key press, outside calls, incoming calls, loss of network coverage and the like.

If it is determined at step 503 that the retrieved definition is in SVG format based on a predetermined file attribute associated with the definition, then at step 504, the SVG engine is invoked for drawing of the user interface element, and thereafter the procedure for refreshing and drawing the user interface elements for output display is completed, and the routine terminates.

On the other hand, if at step 503 it is determined that the retrieved definition is not in SVG format, than at step 505, it is determined whether the retrieved definition is in a bitmap format. If at step 505 it is determined that the retrieved definition is in bitmap format, then at step 506, the bitmap element from the skin file is selected based on the user interface element state. That is, if at step 506 it is determined that there is a bitmap which defines how each user interface element is to be graphically represented, then the bitmap element is selected from the skin file based on the user interface element state (e.g., enabled or disabled, button pressed or not pressed, etc). It should be noted that the user interface elements may include at least one graphical representation, while each element may have one or more default states.

Referring back to FIG. 5, after selecting the bitmap element from the skin file based on the user interface element state at step 506, the bitmap element selected are drawn at step 507 and the routine terminates. Returning to the Figure, if at step 505 it is determined that the retrieved definition is not in bitmap format then at step 508, the processor of the mobile device 101 (FIG. 1) invokes parameter based drawing of the user interface elements. That is, the user interface elements will determine how it is going to be drawn algorithmically based on parameters such as color, size, location, and so on. In this manner, each of the user interface elements together comprising the user interface is refreshed and redrawn, thus updating the output display on the display screen of the mobile device 101 (FIG. 1).

Indeed, as discussed above, a skin may be viewed as a set of files that specify a mobile device 101's look and feel. For example, in one embodiment, a skin may have an associated ring tone or a color configuration. In addition, a skin may be used to establish a predetermined set of parameters which can alter the behavior of the applications of the operating device such as the mobile device 101 such that when downloaded and configured, the skin may modify the existing functions and/or applications pre-configured in the mobile device 101. In one embodiment, skins may include documents which define the visual and behavioral aspects of the mobile device 101 browser components, where the components may include a user interface (UI) widget (or "element"), a screen composition, an application and the entire system.

For example, a skin associated with simplifying electronic mail program functions in the mobile device 101 may be configured to remove, once downloaded in the mobile device, some functions associated with the electronic mail program. More specifically, the downloaded skin may be associated with simplifying the send function associated with the electronic mail program in the mobile device 101 such that, composed electronic mail messages from the mobile device 101 may be configured to be automatically transmitted to the intended recipient over the data network 102 upon detection of the user's name as part of the electronic mail message.

As also discussed in detail above, the main skin file in one embodiment is an XML file that is configured to refer to the image and sound files that define the rest of the skin. In one aspect of the present invention, the skin specifies the background images, for example, of the mobile device user interface. Moreover, the skin may specify the sounds for various common user actions. Additionally, the skin is configured to specify the coordinates at which portions of the user interface components draw, as well as the shape and styles of the components and the background colors.

In one aspect, the skins may be implemented using a combination of XML documents and bitmap images. Moreover, other hierarchical representation of name/value pairs may be used. Moreover, a skin file (XML) may be compiled to an efficient binary representation when loaded. With space constraints, the binary version may be stored rather than downloading/storing the XML version. The XML to binary compilation process may be performed either on demand or at startup or any combination of both. Additionally, as mentioned above, the XML files may be composed of XML fragments which are identified by a name and contains a set of name-value pairs. In one embodiment, the name-value pairs may be textual or numerical. Also, the name-value pairs may also reference sub-frames into the skin picture files as discussed in further detail below.

Moreover, the XML information may be linked to different levels within the mobile device browser such as the user interface element classes, the application, and at a global level. Additionally, since skinning properties may be configured to target a given level within the mobile device browser, a skin item at the application level, for example, may be configured to override a global skin setting. For example, even though the mobile device 101 settings may be preset to a particular global color configuration, specific applications running in the mobile device 101 such as a game program may want to override such global color configuration and use its own color settings.

In a similar manner, the skinning parameters used by a sub class (in the object oriented sense) of a widget which would have some default skinning parameters may be extended or overridden by a set of skinning properties specific to this sub class. Also, a sub class may also just add some skinning properties to the default skin parameters which would be specific to this subclass.

In accordance with one embodiment of the present invention, a mobile device application (or "skin manager") may be configured to manage multiple sets of skins and allow the switching from one skin set to another. Also, new skins may be configured to make reference to skinning information already present in other skins to avoid unnecessary data replication. Additionally, new skins may also be implemented by taking advantage of the overriding mechanism of a skin manager.

In another embodiment of the present invention, new skins may be downloaded over the air by the end user, billed, include digital rights information, and be configured with the same billing and DRM mechanisms used for ringtones and other downloads. Also, skins may be loaded into the mobile device such as a mobile telephone at the time of manufacture or over the air via network-initiated push such that, for example, the skins are loaded into the mobile device without having the mobile device prompt for or request for such downloading. Additionally, the mobile device 101 may be preconfigured or pre-loaded with a set of skins which are DRM protected in such a way that if the user wants to use one of the pre-loaded skins, the user will be prompted to purchase the corresponding DRM from the respective skin vendor over the data network 102.

As discussed above, the SVG (Scalable Vector Graphics) which is an element defining the background defines graphics, animation, and interaction with procedural code. Any static image could be replaced by an SVG image or a set of images to implement animation or any other animation source. This animation can be displayed automatically either in static or in idle state, or displayed as a response to an outside event, such as key press, outside calls, incoming calls, loss of network coverage and the like.

Furthermore, skin information may be modified locally by procedural code. For example, the theme color may be set without having to download a new skin. In addition, the skin may be configured to reference a set of settable variables which could be user-changeable.

In one embodiment, skinnable elements include background, all strings used in applications (error messages, menu names, menu items, soft key labels, etc.), look of widgets, radio buttons, menus, checkboxes, lists, buttons, softkeys, layout of items in applications, selection of transition effects, audio effects associated with all these elements, audio effects associated with events, key press, network events (incoming calls, message arrived, etc.), error events, timers, application specific items (messaging application, idle screen, phone book, etc.), sort order, icon/tool bar, and layout, to name a few. The skinnable elements referenced above are for illustrative purposes, and is not intended to be an exhaustive list.

Additionally, since MIDP 2.0 or other Java framework may use the mobile device UI elements, the skinning information may also be applicable to Java applications in the mobile device.

In a further aspect, mobile telephone-specific items such as indicators for signal level, battery, and the like may be part of the skin information. In addition, pre-defined bookmarks and embedded links to related web sites, services, or content may also be included as part of the skin information such that the mobile device 101 user may be directed to the websites services or contents associated with the pre-defined bookmarks and embedded links to increase network usage and content access. For example, a pre-defined bookmark may be associated with a commercial newspaper website that includes third party vendor advertisements which may be displayed on the user's mobile device 101.

Additionally, new fonts may be referred by the skin documents and be part of a skin package. Also, multiple skin schema may be used in a modular manner (that is, one or more skins separately which together comprise the multiple skin schema) to have a finer grain customization of the mobile phone.

In a further embodiment, skin composers may be provided on the server side (for example, at the vendor terminal 104 (FIG. 1) which would allow the selection of the appearance of the skin by choosing on a per item basis (for example, radio button, checkbox, background, sounds and so on) and transmitting to the mobile device 101 (FIG. 1) of the user a valid final skin as a result.

In one embodiment of the present invention, skins may be co-branded with data network operators such as mobile telephone network providers, web site content providers, games, popular culture characters and the like, such that the skins may be associated with one or more of a predetermined co-branded content, or alternatively, the usage of a co-branded content will allow the user to obtain a corresponding skin. In this manner, commercial products and services may be associated with a skin which is downloaded by a user, or alternatively, the purchase or consumption of a product provides an associated skin to the user such that, using the skin, the user is able to obtain further product experience. In a further aspect, the skin configuration may be retained in the vendor terminal such that the user may be channeled to other related products and services associated with the selected skin.

By way of an example, a skin may contain a music sample which, when downloaded, outputs the music sample, and after listening to it, if the listener is interested in music related to the music sample such as album information of the same artist, merchandise such as clothing related to the artist, and the like, the skin may include information to direct the user to the album or merchandise information.

As another example, a music file could be included with the skin package in such a way that through the use of the DRM rights associated with the music file, the music file could be listen to a limited number of times (e.g., three times) in such a way that after the maximum number of listening, the DRM mechanism would offer the user the ability to buy the rights on the music (for unrestricted number of listening).

In a further aspect of the invention, the skins may be digitally signed to ensure their integrity and to ensure that they are targeted for the device that receives them. On the other hand, a validation mechanism may be provided to ensure that the skins downloaded are from a trusted or proper source (e.g., vendor terminal). The properties and the digital signature are then validated or authenticated by the mobile device. In this manner, the validation of the digital signature, for example, may provide a certain level of control of the skin dissemination and distribution by the provider of the skin.

In yet a further aspect, over the air and pre-installed skins may require different level of legal rights associated thereto, such that skinning of certain things may be reserved for pre-loaded skins, for example. In this example, the downloaded skin may then be a partial skin. This approach may provide better protection of copyrighted content and also, provide a certain level of control over the downloaded skins.

The applications to provide skin building, validation/authentication, and signing tools may be provided either to the data network carrier for the mobile device.

Furthermore, skins in one embodiment may include application specific data for, for example, for messaging and the mobile device browser.

Additionally, in a further aspect of the present invention, a set of related downloads (for example, skin, ringtones, sign-on screen, and so on) may be provided as a package that a user can download in a single transaction, where each download in the package may be in the multi-part download or included by reference (e.g. by a Uniform Resource Identifier (URI)). Moreover, within the scope of the present invention, a skin may be configured to be used to download an application that is DRM controlled or constructed to play with a predetermined content or with content from a predetermined content provider (for example, a video viewer, a photo manipulator, or a MP3 player). The skin may be configured to refer to a URL or a user interface that permitted the associated download. In this manner, the downloaded application may be used in a controlled manner to play (or output) the respective content.

The various processes described above including the processes operating in the software application execution environment in the communication network 100 including the routines described in conjunction with FIGS. 2-5, may be embodied as computer programs developed using an object oriented language that allows the modeling of complex systems with modular objects to create abstractions that are representative of real world, physical objects and their interrelationships. The software required to carry out the inventive process, which may be stored in a memory of the mobile device 101, may be developed by a person of ordinary skill in the art and may include one or more computer program products.

Various other modifications and alterations in the structure and method of operation of this invention will be apparent to those skilled in the art without departing from the scope and spirit of the invention. Although the invention has been described in connection with specific preferred embodiments, it should be understood that the invention as claimed should not be unduly limited to such specific embodiments. It is intended that the following claims define the scope of the present invention and that structures and methods within the scope of these claims and their equivalents be covered thereby.

## Claims

1. A method of retrieving a configurable element over a data network, comprising the steps of:
receiving a list of configurable elements;
selecting one or more of the configurable elements from the list of configurable elements, said each one or more of the configurable elements having associated therewith an attribute;
verifying the selected one or more configurable elements; and
storing the verified one or more configurable elements.

2. The method of claim 1 wherein the attribute includes one or more properties associated with a user interface element of a mobile device.

3. The method of claim 1 further including the step of transmitting a request for the list of configurable elements, wherein the step of receiving the list of configurable elements is in response to the transmitting step.

4. The method of claim 1 wherein the step of receiving the list of configurable elements includes receiving the list over a wireless data network.

5. The method of claim 1 wherein the step of receiving a list of configurable elements is automatically performed in response to a predetermined event.

6. The method of claim 5 wherein the predetermined event includes the step of powering on a mobile device for receiving the list of configurable elements.

7. The method of claim 1 wherein the one or more configurable elements is an extensible markup language (XML) file.

8. The method of claim 1 wherein the verifying step includes the steps of:
determining the validity of the selected one or more configurable elements; and
determining an access attribute associated with each of the selected one or more configurable elements.

9. The method of claim 8 wherein the step of determining the validity of the selected one or more configurable elements includes:
retrieving an attribute associated with each of the selected one or more configurable elements; and
comparing the retrieved attribute with a predetermined attribute associated with the respective each of the selected one or more configurable elements.

10. The method of claim 9 wherein the predetermined attribute includes a configurable element validity information.

11. The method of claim 8 wherein the access attribute associated with each of the selected one or more configurable elements includes a digital rights management (DRM) information associated with the respective one or more configurable elements.

12. The method of claim 1 further including the step of updating a user interface associated with the selected one or more configurable elements.

13. The method of claim 12 wherein the step of updating includes the steps of:
generating one or more output signals corresponding to the selected one or more configurable elements; and
output displaying the generated one or more output signals on a display screen of a mobile device.

14. The method of claim 12 wherein the step of updating includes the steps of:
retrieving a definition associated with the user interface;
determining a refresh attribute of the retrieved definition; and
updating the user interface based on the refresh attribute.

15. The method of claim 14 wherein the refresh attribute includes one of a scalable vector graphics (SVG), a bitmap, a set of name-value pairs, and a set of name-value pairs associated with a respective set of bitmaps.

16. The method of claim 1 wherein each of the selected one or more configurable elements is respectively associated with a third party product or service.

17. The method of claim 16 wherein the third party product or service associated with each of the one or more configurable elements includes one or more of a music download, a video clip download, a merchandise purchase, a set of preconfigured softkeys, and a fee-based subscription information.

18. A system for providing a configurable element over a data network, comprising:
a data network;
a vendor terminal operatively coupled to the data network, the vendor terminal configured to transmit one or more configurable elements;
a user device operatively coupled to the data network, the user device configured to receive the one or more configurable elements from the vendor terminal for display on the user device.

19. The system of claim 18 wherein the user device includes one of a mobile telephone, a personal digital assistant, a handheld computer, a laptop computer, and a pager.

20. The system of claim 18 wherein the data network includes a wireless data network.

21. The system of claim 18 wherein the user device is configured to transmit a user device identification code to the vendor terminal, and further, wherein the vendor terminal is configured to transmit a list of eligible configurable elements based on the user device identification code received from the user device.

22. The system of claim 18 wherein the user device includes a display screen configured to output display the received one or more configurable elements.

23. A program storage device readable by a machine, tangibly embodying a program of instructions executable by the machine to perform a method of retrieving a configurable element over a data network, comprising the steps of:
receiving a list of configurable elements;
selecting one or more of the configurable elements from the list of configurable elements, said each one or more of the configurable elements having associated therewith an attribute;
verifying the selected one or more configurable elements; and
storing the verified one or more configurable elements.

24. A method of providing content access over a data network, comprising:
identifying a one or more attributes of a content over a data network;
associating a configurable element with one or more attributes of the data content; and
transmitting the configurable element.

25. The method of claim 24 wherein the configurable element includes a user interface element.

26. The method of claim 25 wherein the user interface element includes one or more of a background information, a softkey information, a layout information of one or more applications, an audio information, a video information, and a data network information.

27. The method of claim 24 wherein the step of transmitting includes the step of receiving a request associated with the one or more attributes of the content over the data network.

28. The method of claim 24 wherein the step of transmitting includes the step of identifying a predetermined configuration of a mobile device, and in response thereto, transmitting the configurable element to the mobile device.

29. The method of claim 24 further including the step of receiving a purchase request for purchasing one or more of a product and a service associated with the one or more attributes of the content.

30. The method of claim 29 wherein the one or more of a product and a service includes a music download, video download, a merchandise, a video game, and a use license of an application.

31. The method of claim 29 further including the step of transmitting a purchase transaction information in response to the purchase request.

32. The method of claim 31 wherein the purchase transaction information includes a price information associated with the one or more of the product and the service.

33. The method of claim 29 wherein the step of receiving the purchase request includes receiving a financial account information, and a personal information associated with the financial account information.

34. The method of claim 33 wherein the financial account information includes one of a credit card information, a debit card information, a cash card information, and a bank account information.
